# EUROPEAN PATENT APPLICATION

(11) **EP 4 191 185 A1**
(43) Date of publication of application: **07.06.2023**
(21) Application number: 21851210.1
(22) Date of filing: 30.07.2021
(51) Int. Cl.: F28D 1/053, F28F 1/12, F28F 1/32, F24F 5/00, F24F 13/22, F24F 13/30, F24F 11/83, F24F 110/12, F24F 110/32, F24F 1/0063, F24F 1/0067

(54) **AIR CONDITIONER UNIT AND AIR CONDITIONER**

(30) Priority: 30.07.2020 JP 2020129354
(71) Applicant: Daikin Industries, Ltd., Osaka-shi, Osaka 530-0001 (JP)
(72) Inventor: KABU, Marie, Osaka-shi, Osaka 530-0001 (JP)
(74) Representative: Hoffmann Eitle
(86) International application number: PCT/JP2021/028364
(87) International publication number: WO 2022/025263

(57) **Abstract**

This air conditioner unit (1) comprises a heat exchanger (10), but does not comprise any device that forcibly passes air to the heat exchanger (10). The heat exchanger (10) can be installed in a partition part (7) that demarcates a target space (ST) from areas outside of the target space (ST), and is configured such that an airflow in contact with the heat exchanger (10) can pass through. The heat exchanger (10) is configured so that a fluid can flow through the interior thereof. Due to a fluid having a temperature different from the outside air temperature flowing through the heat exchanger (10), the temperature of the airflow flowing from outside of the target space (ST) into the target space (ST) is changed, and the air inside the target space (ST) is conditioned by the airflow of which the temperature was changed.

## Description

### TECHNICAL FIELD

The present disclosure relates to an air conditioner unit and an air conditioner.

### BACKGROUND ART

Patent Literature 1 describes a known technology related to an air conditioner. The technology described in Patent Literature 1 mixes cold air and warm air and blows the mixed cold air and warm air at gently fluctuating velocities to produce a nature-like breeze.

### CITATION LIST

### Patent Literature

Patent Literature 1: Japanese Laid-Open Patent Publication No. 05-185823

### SUMMARY OF INVENTION

### Technical Problem

In the prior art, the air blown by a fan passes through a heat exchange that obstructs the flow of an air current. An objective of the present disclosure is to provide an air conditioner unit and an air conditioner that allow air current to be used to perform air conditioning.

### Solution to Problem

An air conditioner unit that solves the above problem includes a heat exchanger. The air conditioner unit is devoid of a device that forces air to pass through the heat exchanger. The heat exchanger is arrangeable in a partition that separates a subject area from outside the subject area. The heat exchanger is configured to allow passage of air current that comes into contact with the heat exchanger. The heat exchanger is configured to allow a fluid to circulate internally. The heat exchanger changes a temperature of air current entering the subject area from outside the subject area with the fluid flowing through the heat exchanger having a temperature that differs from an outside temperature to air-condition the subject area with the air current having the changed temperature. This configuration uses air current produced indoors or outdoors to perform air conditioning.

The air conditioner unit further includes a water tank that stores water condensed on the heat exchanger and/or a drain that drains the water condensed on the heat exchanger. This configuration stores or drains the water condensed on the heat exchanger so that the vicinity of the heat exchanger will not be dampened by water.

In the air conditioner unit, the water tank and the drain are configured to be movable or extendable. This allows the size of the water tank to be changed. Also, this allows the position where the water is drained to be changed.

In the air conditioner unit, the heat exchanger is configured to partition a residential area. This configuration partitions a residential area while performing air conditioning in the air near the partition.

In the air conditioner unit, the heat exchanger is shaped as a panel or a foldable panel. With this configuration, the panel-shaped heat exchanger facing a subject region performs air conditioning in the subject region.

In the air conditioner unit, the heat exchanger includes pipes arranged in intervals, fins arranged on the pipes, and a support that supports the pipes. The support supports the pipes such that a first surface of the pipes and a second surface, opposite to the first surface, are exposed. This configuration exposes the first surface of the pipes and the second surface, opposite to the first surface. This allows for cooling of the air current flowing from one of a first space in front of the first surface of the heat exchanger and a second space in front of the second surface of the heat exchanger to the other.

In the air conditioner unit, the pipes include a groove extending in a longitudinal direction of the pipes. This configuration drains the water condensed on the heat exchanger along the pipes. Thus, the water condensed on the heat exchanger is collected at a predetermined position, thereby avoiding the water from spreading around the heat exchanger.

In the air conditioner unit, the pipes and/or the fins include a surface coated with a water-repellent film. This configuration limits the collection of condensed water on the surface of the pipes and the fins to avoid air current from becoming humid.

The air conditioner unit further includes a fluid supply pipe and a fluid drain pipe. The fluid supply pipe supplies the fluid to the heat exchanger. The fluid drain pipe drains the fluid out of the heat exchanger. The fluid supply pipe and the fluid drain pipe are connected to the heat exchanger by a rotatable joint or a flexible joint. This configuration allows for smooth movement of the heat exchanger.

An air conditioner that solves the above problem includes any of the above-described air conditioner units. This configuration uses air current to perform air conditioning.

The air conditioner further includes a control unit. The control unit controls a flow rate and/or a temperature of the fluid based on a temperature of the subject area, a direction of air current passing through the heat exchanger, a velocity of air current passing through the heat exchanger, and/or the outside temperature. This configuration adjusts the temperature of air current (temperature of air in air current) passing through the air conditioner unit.

The air conditioner further includes an air current detector that detects the direction of air current. The control unit obtains the direction of air current, from the air current detector, and a heat exchanger temperature of the heat exchanger. During a cooling operation, the control unit controls the flow rate and/or the temperature of the fluid so that the heat exchanger temperature when air current is directed from inside the subject area toward outside the subject area becomes higher than a target temperature of the heat exchanger temperature when air current is directed from outside the subject area toward inside the subject area. During a heating operation, the control unit controls the flow rate and/or the temperature of the fluid so that the heat exchanger temperature when air current is directed from inside the subject area toward outside the subject area becomes lower than the target temperature of the heat exchanger temperature when air current is directed from outside the subject area toward inside the subject area. This configuration saves resources. For example, the flow rate of the fluid in the heat exchanger can be decreased. Also, this configuration reduces the energy consumed by adjusting the temperature of the fluid.

The air conditioner includes a first heat exchanger serving as the air conditioner unit, a second heat exchanger serving as an additional air conditioner unit, a first fluid passage connecting the first heat exchanger and the second heat exchanger, and a second fluid passage connecting the first heat exchanger and the second heat exchanger. During a cooling operation, the control unit controls the temperature of the fluid so that the heat exchanger temperature of the first heat exchanger becomes lower than a temperature of the subject area when in an air current direction state in which air current from the first heat exchanger enters the subject area and passes through the second heat exchanger, and so that the heat exchanger temperature of the second heat exchanger becomes higher than the temperature of the subject area in the air current direction state. During a heating operation, the control unit controls the temperature of the fluid so that the heat exchanger temperature of the first heat exchanger becomes higher than the temperature of the subject area in the air current direction state, and so that the heat exchanger temperature of the second heat exchanger becomes lower than the temperature of the subject area in the air current direction state.

This configuration cools the fluid with air current flowing out of the subject area during cooling operation, which in turn, reduces energy consumption. This configuration also heats the fluid with air current flowing out of the subject area during heating operation, which in turn, reduces energy consumption.

An air conditioner that solves the above problem is an air conditioner that air-conditions the subject area with a refrigeration cycle. The air conditioner includes any of the above-described air conditioner units as a heat exchanger for the refrigeration cycle. This configuration uses air current to perform air conditioning in the air conditioner having a refrigeration cycle.

The air conditioner includes a first heat exchanger serving as the air conditioner unit, a second heat exchanger serving as an additional air conditioner unit, an expansion valve, a compressor, and a control unit. The expansion valve is arranged in a first fluid passage that connects the first heat exchanger and the second heat exchanger. The compressor is arranged in a second fluid passage that connects the first heat exchanger and the second heat exchanger. During a cooling operation, the control unit controls the temperature of the fluid by actuating the compressor and/or the expansion valve so that the heat exchanger temperature of the first heat exchanger becomes lower than a temperature of the subject area when in an air current direction state in which air current from the first heat exchanger enters the subject area and passes through the second heat exchanger, and so that the heat exchanger temperature of the second heat exchanger becomes higher than the temperature of the subject area in the air current direction state. During a heating operation, the control unit controls the temperature of the fluid by actuating the compressor and/or the expansion valve so that the heat exchanger temperature of the first heat exchanger becomes higher than the temperature of the subject area in the air current direction state, and so that the heat exchanger temperature of the second heat exchanger becomes lower than the temperature of the subject area in the air current direction state.

This configuration cools the fluid with air current flowing out of the subject area during cooling operation, which in turn, reduces energy consumption. This configuration also heats the fluid with air current flowing out of the subject area during heating operation, which in turn, reduces energy consumption.

The air conditioner further includes a switching valve that switches a direction in which the fluid flows. During a cooling operation, the switching valve controls the fluid to flow in a first direction so that the heat exchanger temperature when air current from outside the subject area enters the subject area in an inwardly directed state becomes lower than the temperature of the subject area. Further, the switching valve controls the flow of the fluid to switch to a second direction that is opposite the first direction when the air current changes directions from inward to the subject area to outward from the subject area so that the heat exchanger temperature becomes higher than the temperature of the subject area. During a heating operation, the switching valve controls the fluid to flow in the second direction so that the heat exchanger temperature in the inwardly-directed state in which air current from outside the subject area enters the subject area becomes higher than the temperature of the subject area. Further, the switching valve controls the flow of the fluid to switch to the first direction when the air current changes directions from inward to the subject area to outward from the subject area so that the heat exchanger temperature becomes lower than the temperature of the subject area.

This configuration cools the fluid with air current flowing out of the subject area during cooling operation, which in turn, reduces energy consumption. This configuration also heats the fluid with air current flowing out of the subject area during heating operation, which in turn, reduces energy consumption.

### BRIEF DESCRIPTION OF DRAWINGS

Fig. 1 is a diagram showing an example of an air conditioner unit when in use.
Fig. 2 is a diagram showing another example of the air conditioner unit when in use.
Fig. 3 is a perspective view of a heat exchanger.
Fig. 4 is a perspective view of another heat exchanger.
Fig. 5 is a perspective view of a further heat exchanger in a first form.
Fig. 6 is a perspective view of the further heat exchanger in a second form.
Fig. 7 is a perspective view of part of the heat exchanger.
Fig. 8 is an enlarged view of pipes.
Fig. 9 is an enlarged view of the heat exchanger.
Fig. 10 is a front view showing part of the heat exchanger.
Fig. 11 is an enlarged view of another heat exchanger.
Fig. 12 is an enlarged view of a further heat exchanger.
Fig. 13 is cross-sectional view of the pipe.
Fig. 14 is a perspective view of a drain pan.
Fig. 15 is a perspective view of a drain pan.
Fig. 16 is a perspective view of the drain pan and a water tank.
Fig. 17 is a perspective view of part of the heat exchanger.
Fig. 18 is a perspective view of a rotatable joint.
Fig. 19 is a perspective view of a flexible joint.
Fig. 20 is a block diagram of an air conditioner including a control unit.
Fig. 21 is a schematic diagram of the air conditioner in a first embodiment.
Fig. 22 is a schematic diagram of the air conditioner in a second embodiment.
Fig. 23 is a schematic diagram of the air conditioner in a third embodiment.
Fig. 24 is a chart illustrating the relationship of the direction of air current and a heat exchanger temperature during cooling operation in the air conditioner in a fourth embodiment.
Fig. 25 is a chart illustrating the relationship of the direction of air current and the heat exchanger temperature during heating operation in the air conditioner in the fourth embodiment.
Fig. 26 is a schematic diagram of the air conditioner in a fifth embodiment.
Fig. 27 is a block diagram of the air conditioner in the fifth embodiment during a cooling operation.
Fig. 28 is a block diagram of the air conditioner in the fifth embodiment during a heating operation.
Fig. 29 is a block diagram of the air conditioner in a sixth embodiment.
Fig. 30 is a perspective view showing an air conditioner unit of a modified example.
Fig. 31 is a diagram showing an installation example of the air conditioner unit.

### DESCRIPTION OF EMBODIMENT

### Air Conditioner Unit

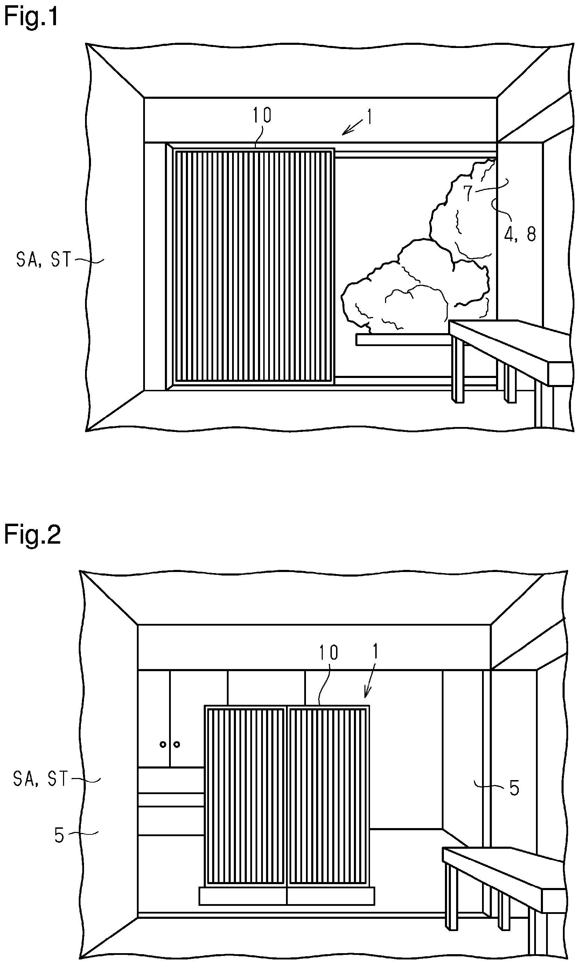

An air conditioner unit 1 will now be described with reference to Figs. 1 to 19.

The air conditioner unit 1 performs air conditioning in a subject area ST. Specifically, the air conditioner unit 1 uses air current to perform air conditioning indoors or outdoors. Performing air conditioning includes producing a comfortable air current. The subject area ST may be indoor or outdoor. An outdoor subject area ST may be an open area or surrounded by a partition 7. An area surrounded by the partition 7 is, for example, a residential area SA in a house or an interior space in a factory, a warehouse, or an office. An open area is, for example, an area under a roof, such as a terrace or a balcony, or an area under a pergola or a gazebo 111 in a yard or on a golf course. The partition 7 may be arranged in an open area. An outside temperature TA, which will be described later, refers to the temperature of the air in an external region of the subject area ST.

In the present embodiment, the air conditioner unit 1 cools the air. The air conditioner unit 1 may heat the air. The air conditioner unit 1 is devoid of a device that forces air to pass through a heat exchanger 10. A device that forces air to pass through the heat exchanger 10 is, for example, a fan. A typical air conditioner includes a fan that forces air into a case to cool the air with the heat exchanger 10. The air conditioner unit 1 of the present embodiment does not include such a fan. The air conditioner unit 1 is configured to allow passage of air current produced near the air conditioner unit 1. The air conditioner unit 1 cools or heats the air that passes through the air conditioner unit 1. In this manner, the air conditioner unit 1 conditions the air around the air conditioner unit 1. Air current includes wind. Air current is, for example, a natural outdoor wind, a natural outdoor wind into an indoor area, an indoor air current resulting from convection of the air, air current resulting from the air blown from another air conditioner, an indoor air current produced by a ventilation fan, or wind produced by an electric fan.

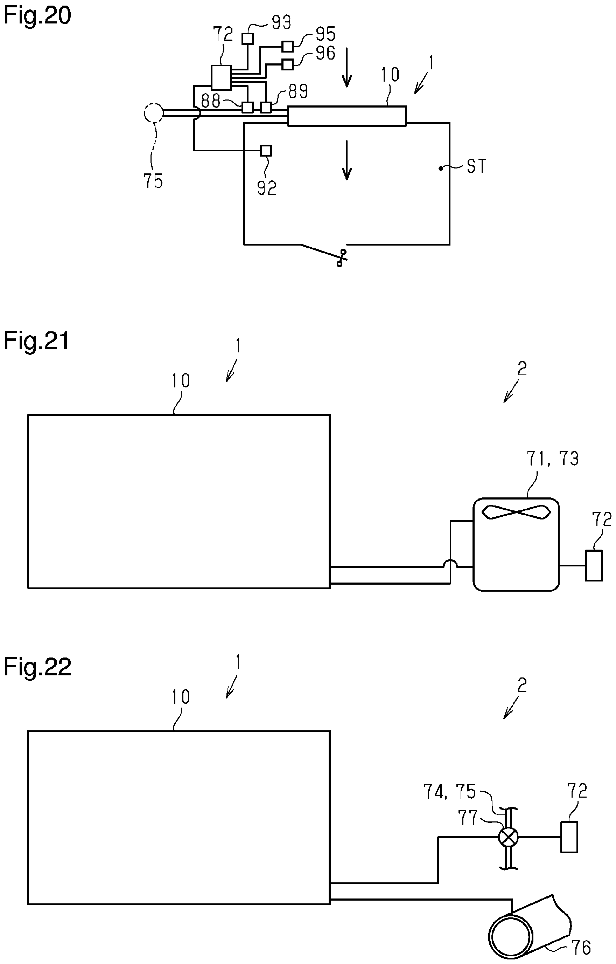

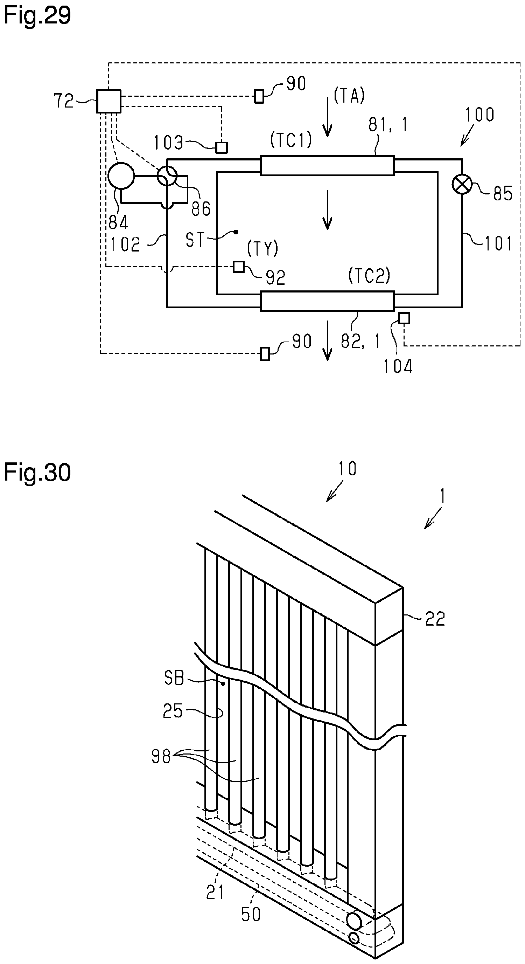

The air conditioner unit 1 includes the heat exchanger 10. The heat exchanger 10 is configured to allow passage of air current that comes into contact with the heat exchanger 10. For example, the heat exchanger 10 is configured to allow a fluid supplied from a cooling apparatus 71 or a fluid supply device 75 to circulate internally (refer to Figs. 20 and 21). The fluid supply device 75 is, for example, a faucet or a pump that pumps the water out of a well or a river. In another example, the heat exchanger 10 is an element of a refrigerant circuit 80 and is configured to allow a fluid supplied from an additional heat exchanger of the refrigerant circuit 80 to circulate internally (refer to Fig. 29). The heat exchanger 10 changes the temperature of air current entering the subject area ST from outside the subject area ST with a fluid flowing through the heat exchanger 10. The fluid has a temperature that differs from the outside temperature TA. The temperature of air current is changed as it passes through the heat exchanger 10. Then, the air current conditions the air in the subject area ST.

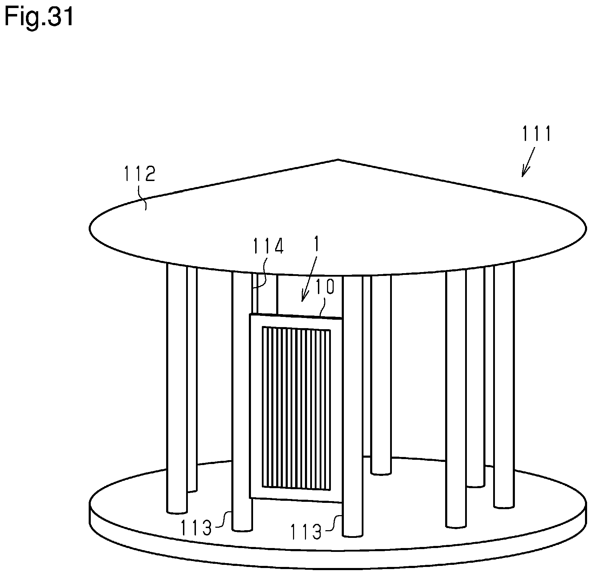

In an example, the heat exchanger 10 is arrangeable in the partition 7. The partition 7 separates the subject area ST from outside the subject area ST. When the subject area ST corresponds to the entire internal space of a building, the outside of the subject area ST refers to the external space of the building. When the subject area ST corresponds to the internal space of one room in a building, the outside of the subject area ST includes the internal space of other rooms and hallways adjacent to the subject area ST as well as the external space of the building. The partition 7 includes an outer wall or an inner wall of a building or a partition arranged indoors or outdoors. In the case of an outer wall, the heat exchanger 10 is arranged in an open portion 8. The open portion 8 is, for example, a window frame. In the case of an open space formed by a terrace, a balcony, or the gazebo 111, the partition 7 corresponds to columns 113 that support a roof 112. The heat exchanger 10 is arranged in an open portion 114 between two columns 113 (refer to Fig. 31).

As shown in Fig. 1, the heat exchanger 10 is configured to partition the residential area SA.

In the present embodiment, the heat exchanger 10 is arranged on the boundary of an outdoor area and an indoor area within the premise of a building. Specifically, the heat exchanger 10 is arranged in a window 4 of the building. The heat exchanger 10 may be movable in the window 4 and guided by a window frame in the same manner as a window glass. The heat exchanger 10 may be fixed in the window 4. The heat exchanger 10 may be arranged overlapping a window glass that can be opened. In this case, an outdoor air current enters the indoor area through the heat exchanger 10 when the window glass is open.

As shown in Fig. 2, in another example, the heat exchanger 10 is configured to be a partition board. Such a heat exchanger 10 also functions as a partition board that partitions a room 5. The heat exchanger 10 functioning in the same manner as a partition board is arranged indoors between an eat-in kitchen and a living room.

In an example, the heat exchanger 10, which is arrangeable in the open portion 8 of the partition 7, is disposed indoors in a window between a hallway and a room. The heat exchanger 10 may be part of a wall partitioning a room. In another example, the heat exchanger 10 may be arrangeable on a desk.

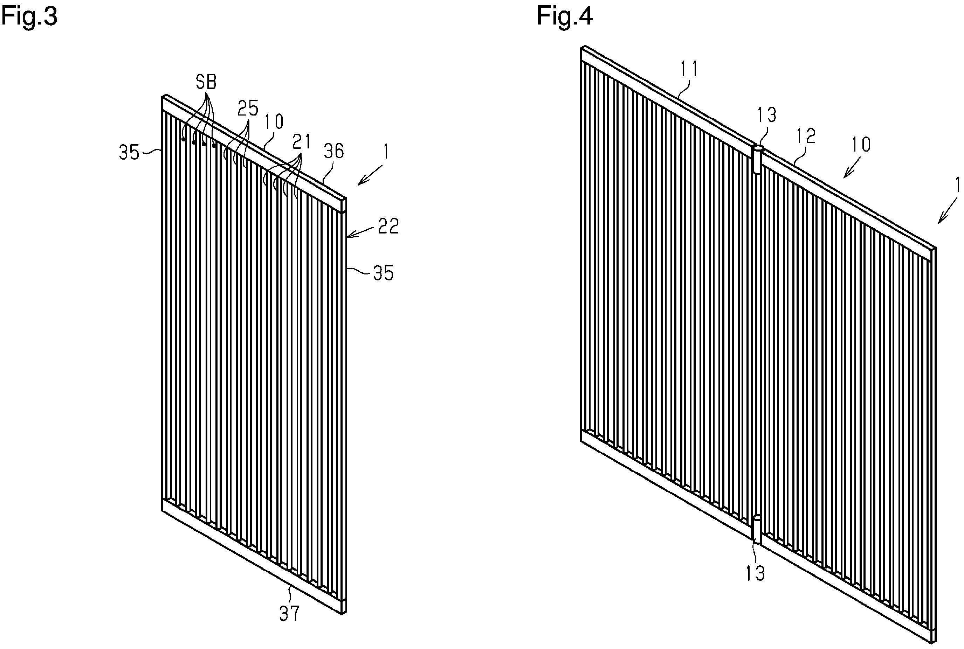

As shown in Fig. 3, for example, the heat exchanger 10 is shaped as a panel. The heat exchanger 10 is rectangular in a front view. The heat exchanger 10 may be circular, elliptical, or triangular in a front view. There is no limitation to the thickness of the heat exchanger 10. The size of the heat exchanger 10 in a front view is not specified. The heat exchanger 10 may be sized in accordance with an application. For example, a compact heat exchanger 10 has a height of 30 cm or greater and a length of 30 cm or greater. A medium-sized heat exchanger 10 has a height of 50 cm or greater and a length of 100 cm or greater. A large-sized the heat exchanger 10 has a height of 100 cm or greater and a length of 200 cm or greater.

In an example, the heat exchanger 10 is configured to have a thickness of 10 cm or less in a side view. Preferably, the heat exchanger 10 has a thickness of 5 cm or less in a side view. Further preferably, the heat exchanger 10 has a thickness of 3 cm or less in a side view. The thickness of the heat exchanger 10 may be set so that the heat exchanger 10 fits in a window frame.

As shown in Fig. 4, the heat exchanger 10 may be shaped as a foldable panel. For example, the heat exchanger 10 includes a left heat exchanger 11 and a right heat exchanger 12. The left heat exchanger 11 and the right heat exchanger 12 each have the same structure as the panel-shaped heat exchanger 10 (refer to Fig. 3). The left heat exchanger 11 and the right heat exchanger 12 are connected by a hinge 13. With this structure, the heat exchanger 10 can be easily stored.

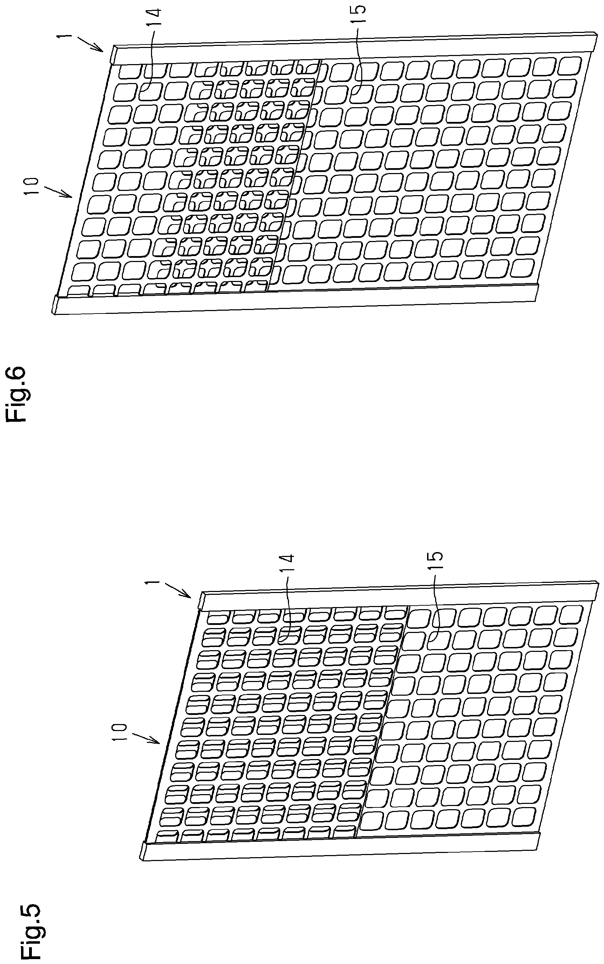

As shown in Figs. 5 and 6, the heat exchanger 10 may include more than one heat exchanger 10. Two compact heat exchangers 10 are arranged overlapping each other. In an example, an upper heat exchanger 14 is movable relative to a lower heat exchanger 15 in an up-down direction (refer to Fig. 6). The upper heat exchanger 14 is supported by two guides. The upper heat exchanger 14 and the lower heat exchanger 15 each have a structure corresponding to the panel-shaped heat exchanger 10 (refer to Fig. 3).

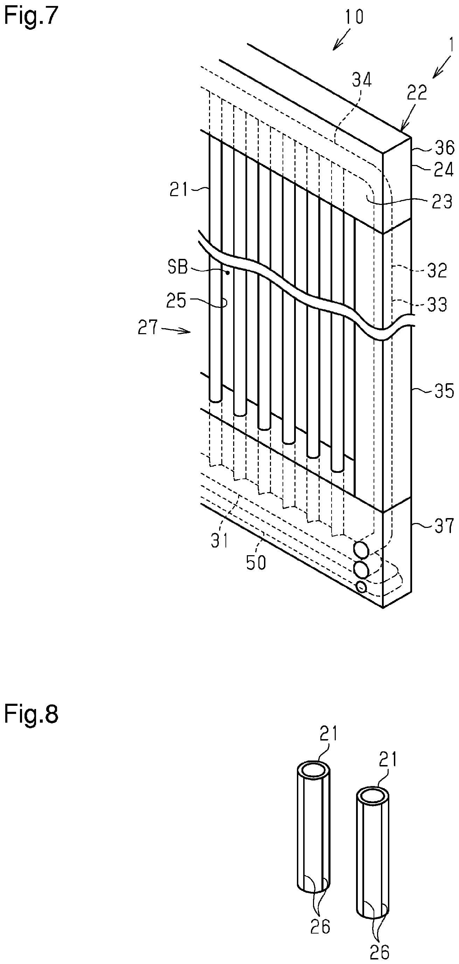

The structure of the heat exchanger 10 will now be described with reference to Fig. 7.

The heat exchanger 10 includes pipes 21 arranged in intervals and a support 22 that supports the pipes 21. The heat exchanger 10 has a first surface 23 and a second surface 24, opposite to the first surface 23, formed by the pipes 21. The heat exchanger 10 includes passages 25 extending through the first surface 23 and the second surface 24. Each passage 25 allows passage of air current. The passage 25 may be a gap SB formed between pipes 21. The passages 25 may be through holes 41 formed in fins 40, which will be described later.

The pipes 21 are configured so that a fluid flows inside the pipes 21. The fluid is, for example, a refrigerant or water as used in a typical air conditioner. The pipes 21 are formed from metal. The pipes 21 are formed from, for example, aluminum or an aluminum alloy. Preferably, the heat exchanger 10 further includes a collection pipe 31 and a distribution pipe 32. The collection pipe 31 collects the fluid flowing through the pipes 21. The distribution pipe 32 distributes the fluid to the pipes 21.

The pipes 21 are arranged next to each other in the sideward direction in the present embodiment. In another example, the pipes 21 are arranged next to each other in the upward direction. In a further example, the pipes 21 are arranged next to each other in a diagonal line. The pipes 21 are arranged upward, sideward, or diagonally to form a pipe unit 27. Two or more pipe units 27 may be arranged overlapping one another in a front view.

As shown in Fig. 8, it is preferred that the pipes 21 include a groove 26 extending in a longitudinal direction of the pipes 21. The longitudinal direction of the pipes 21 is the direction in which the pipes 21 extend. The groove 26 may have any cross-sectional shape. For example, the cross section of the groove 26 may be V-shaped, U-shaped, or W-shaped.

The distribution pipe 32 includes a main portion 33 and a distribution portion 34. The main portion 33 guides a fluid to the distribution portion 34. The main portion 33 is arranged in a vertical support portion 35 of the support 22. The distribution portion 34 is arranged in an upper support portion 36 of the support 22. The upper end of the pipes 21 is connected to the distribution portion 34. The collection pipe 31 is arranged in a lower support portion 37 of the support 22. The lower end of the pipes 21 is connected to the collection pipe 31.

A screen may be arranged on the pipes 21 to prevent the passage of bugs. For example, the heat exchanger 10 arranged in the window 4 includes a bug screen. The screen is arranged on the pipes 21 so as to fill in the gaps SB between the pipes 21.

The support 22 supports the pipes 21 exposing the first surface 23 of the pipes 21 and the second surface 24 that is opposite to the first surface 23. The support 22 has the form of a frame that surrounds the pipe unit 27.

The support 22 includes two vertical support portions 35, the upper support portion 36, and the lower support portion 37. The two vertical support portions 35 are disposed at two sides of the pipe unit 27. The upper support portion 36 connects upper parts of the two vertical support portions 35. The upper support portion 36 support the upper part of the pipe unit 27. The lower support portion 37 connects lower parts of the two vertical support portions 35. The lower support portion 37 supports the lower part of the pipe unit 27. A drain pan 50 is arranged in the lower support portion 37.

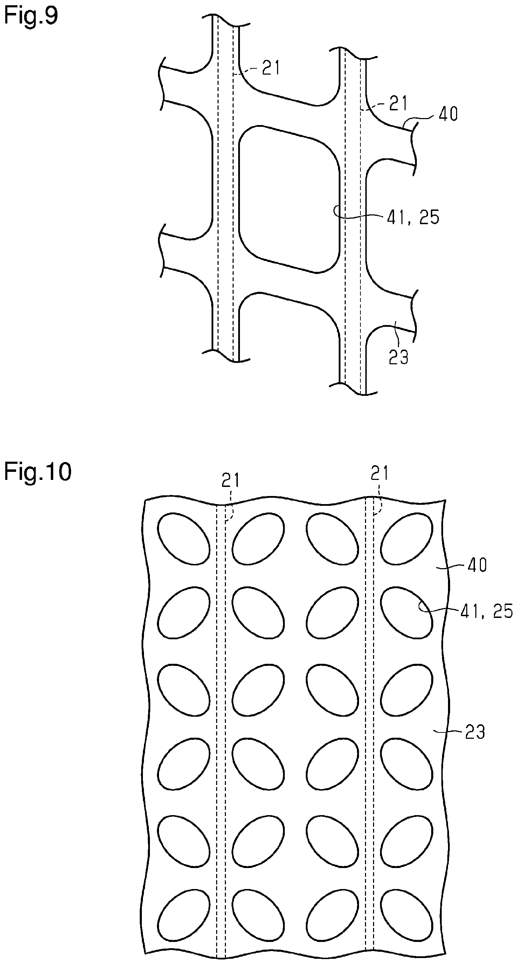

As shown in Fig. 9, it is preferred that the heat exchanger 10 include a fin 40. The fin 40 is arranged on the pipes 21. A plurality of fins 40 may be arranged on the pipes 21. The fins 40 may be projections projecting out of walls of the pipes 21. Preferably, the projections serving as the fins 40 are formed integrally with the pipes 21. This structure reduces loss in conducted heat as compared with a structure in which the pipes 21 and the fins 40 are separate parts.

The fins 40 may connect the pipes 21. A holder may connect the pipes 21.

For example, the fins 40 are formed by a metal sheet having through holes 41. The through holes 41 may have any shape that allows passage of air current. The through holes 41 formed in the fins 40 may have the same shape or different shapes.

As shown in Fig. 10, the through holes 41 arranged in the fins 40 may form a pattern. The through holes 41 may form a repetition of one pattern or a repetition of more than one pattern. The through holes 41 may form a random pattern. The pattern formed by the through holes 41 improves the design of the heat exchanger 10.

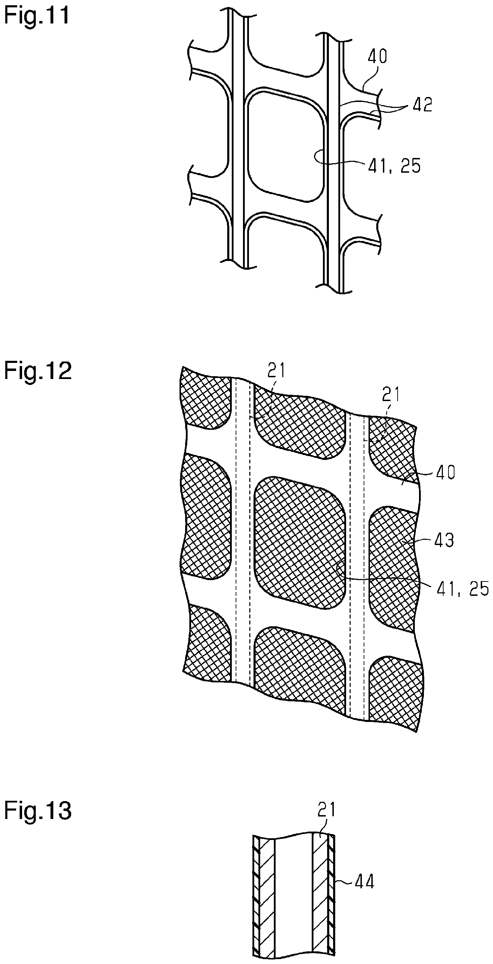

As shown in Fig. 11, it is preferred that the fins 40 include a groove 42 that guides condensed water downward. At least part of the groove 42 extends in the longitudinal direction of the pipes 21. The groove 42 may have any cross-sectional shape. For example, the cross section of the groove 42 may be V-shaped, U-shaped, or W-shaped.

As shown in Fig. 12, a bug screen 43 may be arranged in the through holes 41 of the fins 40. This blocks entry of bugs into the indoor area. The screen 43 may be formed by a member having a high thermal conductivity. The screen 43 is formed by, for example, copper wires or aluminum wires.

As shown in Fig. 13, it is preferred that at least either one of the pipe 21 and the fin 40 includes a surface coated with a water-repellent film 44. The water-repellent film 44 is formed from a water-repellent resin. An example of the water-repellent resin is fluororesin.

As shown in Fig. 7, it is preferred that the heat exchanger 10 include the drain pan 50 that receives condensed water. The drain pan 50 is disposed under the pipe unit 27. The drain pan 50 is arranged inside the lower support portion 37.

Preferably, the air conditioner unit 1 includes a water tank 51 that stores water condensed on the heat exchanger 10 and/or a drain 52 that drains the water condensed on the heat exchanger 10. The water tank 51 stores the water drained from the drain pan 50.

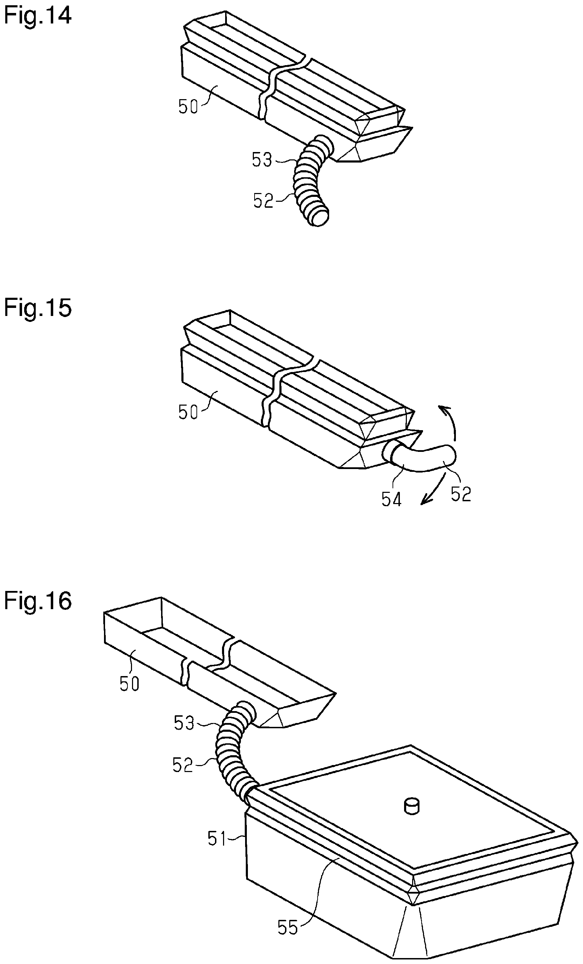

As shown in Fig. 14, the drain 52 is arranged on the drain pan 50. The drain 52 may be extendable. The drain 52 includes, a resin pipe 53 having a bellows. The drain 52 is extended and retracted when the resin pipe 53 with the bellows is expanded or contracted.

As shown in Fig. 15, the drain 52 may be movable relative to the drain pan 50. For example, the drain 52 is rotatable relative to the drain pan 50. The drain 52 is connected to the drain pan 50 by a fitting 54 that includes a rotary section.

As shown in Fig. 16, the water tank 51 may be extendable. For example, the upper part of the water tank 51 includes a bellows 55. The water tank 51 is extended and retracted in the up-down direction by expanding or contracting the upper part. Expansion of the upper part of the water tank 51 increases the amount of water that the water tank 51 can store. Further, contraction of the upper part of the water tank 51 reduces the size of the water tank 51.

As shown in Fig. 16, the water tank 51 may be movable relative to the drain pan 50. For example, the water tank 51 is attached to the drain 52 that is extendable. Thus, the position of the water tank 51 can be easily changed.

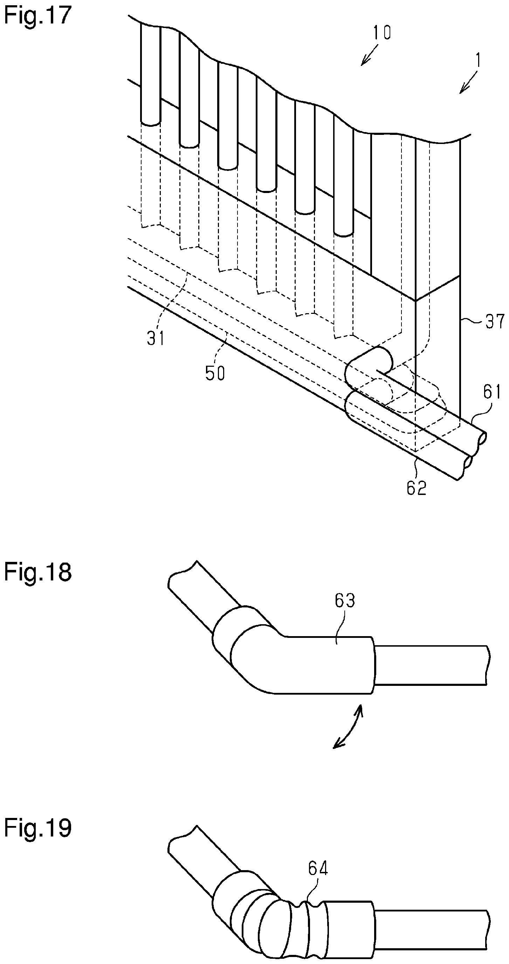

As shown in Fig. 17, the air conditioner unit 1 may further include a fluid supply pipe 61 that supplies a fluid to the heat exchanger 10 and a fluid drain pipe 62 that drains the fluid out of the heat exchanger 10.

The fluid supply pipe 61 may be connected to the heat exchanger 10 by a rotatable joint 63 or a flexible joint 64. The fluid drain pipe 62 is connected to the heat exchanger 10 by the rotatable joint 63 or the flexible joint 64.

Fig. 18 is a diagram showing an example of the rotatable joint 63. Fig. 19 is a diagram showing an example of the flexible joint 64. In this example, the flexible joint 64 has a bellows. The flexible joint 64 may be formed by a rubber hose.

### Air Conditioner

Various types of an air conditioner 2 will now be described with reference to Figs. 20 to 29. The air conditioner 2 includes the air conditioner unit 1. There are two types of the air conditioner 2.

The air conditioner 2 in a first category includes the air conditioner unit 1 (refer to Fig. 20). The air conditioner unit 1 is supplied with a fluid from an external device. Specifically, the air conditioner unit 1 is connectable to the fluid supply device 75. The fluid supply device 75 provides a fluid to the air conditioner unit 1. The fluid supply device 75 corresponds to, for example, a faucet, a river, or a well.

If the temperature of the fluid in the fluid supply device 75 is lower than the outside temperature TA of the subject area ST, when the fluid of the fluid supply device 75 is supplied to the air conditioner unit 1, air current having a temperature lower than the outside air is supplied to the subject area ST. If the temperature of the fluid in the fluid supply device 75 is higher than the temperature of the subject area ST, when the fluid of the fluid supply device 75 is supplied to the air conditioner unit 1, air current having a temperature higher than the outside air is supplied to the subject area ST. The air conditioner 2 of this example does not have to include a control unit 72.

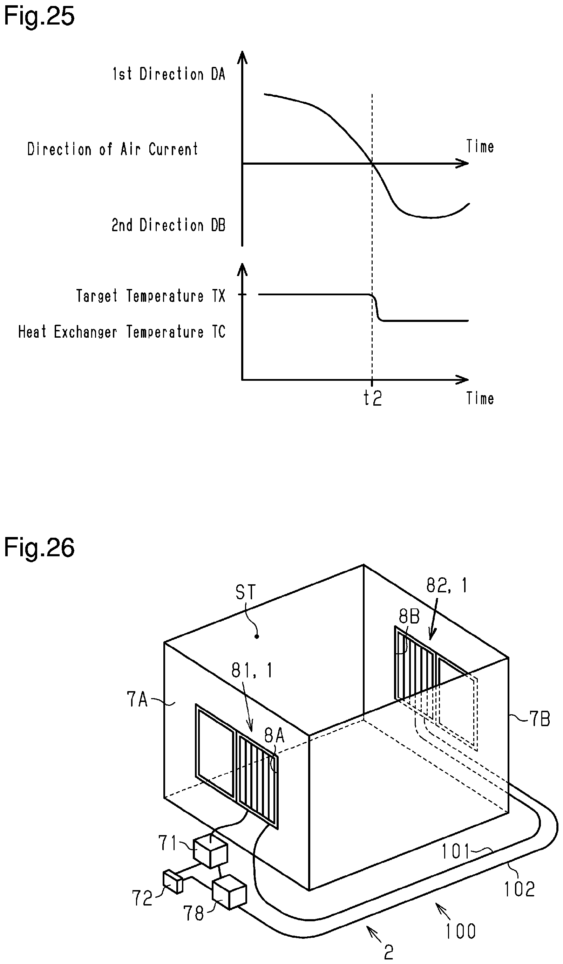

The air conditioner 2 in a second category includes the air conditioner unit 1 and a circulation flow passage through which a fluid is circulated (refer to Fig. 26). The air conditioner unit 1 is arranged in an annular flow passage 100.

A first example of the air conditioner 2 in the second category includes the air conditioner unit 1, the annular flow passage 100, and the cooling apparatus 71 that cools the fluid. The fluid is circulated through the annular flow passage 100. The annular flow passage 100 extends through the air conditioner unit 1 and the cooling apparatus 71. The cooling apparatus 71 is, for example, a heat exchanger cooled by a refrigeration cycle, a water reservoir filled with water from the fluid supply device 75, a container for storing ice and water, a cooling tower, or a blower.

A second example of the air conditioner 2 in the second category includes the air conditioner unit 1, the annular flow passage 100, and a heating apparatus 78 that heats the fluid. The fluid is circulated through the annular flow passage 100. The annular flow passage 100 extends through the air conditioner unit 1 and the heating apparatus 78. The heating apparatus 78 is, for example, a boiler, an electric heater, or a heat exchanger heated by a refrigeration cycle.

A third example of the air conditioner 2 in the second category includes the air conditioner unit 1, the heating apparatus 78 that heats the fluid, the cooling apparatus 71 that cools the fluid, and the annular flow passage 100. The fluid is circulated through the annular flow passage 100. The annular flow passage 100 extends through the air conditioner unit 1, the cooling apparatus 71, and the heating apparatus 78.

A fourth example of the air conditioner 2 in the second category includes a circuit (hereafter, refrigerant circuit 80) that performs a refrigeration cycle (refer to Fig. 29). The refrigerant circuit 80 includes the air conditioner unit 1, a second heat exchanger 82, a compressor 84, and an expansion valve 85. The air conditioner unit 1 serves as a first heat exchanger 81.

As shown in Fig. 20, the air conditioner 2 may include a control unit 72 in addition to the air conditioner unit 1. The control unit 72 includes a processor or an application specific integrated circuit (hereinafter, ASIC). The control unit 72 may be circuitry including a processor or an ASIC. The processor executes various processes according to programs. The processor includes a central processing unit (CPU) and a memory such as a random-access memory (RAM) or a read-only memory (ROM). The memory stores programs that are configured to have the CPU execute processes.

In an example, the control unit 72 obtains, as control information used in various processes, the temperature of the subject area ST, the direction of air current passing through the heat exchanger 10, the velocity of air current passing through the heat exchanger 10, and/or the outside temperature TA.

The temperature of the subject area ST is detected by, for example, a subject temperature sensor 92 arranged inside the subject area ST. The outside temperature TA is detected by an outside temperature sensor 93 arranged outside the subject area ST. The direction of air current passing through the heat exchanger 10 is detected by an air current direction sensor 95. The velocity of air current passing through the heat exchanger 10 is detected by an air current velocity sensor 96.

The control unit 72 obtains data from various types of sensors as control information. The control unit 72 uses the control information to control the flow rate and/or the temperature of the fluid.

In a first example, the control unit 72 controls the flow rate of the fluid by adjusting the rotation speed of a motor in a pump 88. The pump 88 is arranged in a pipe connected to the air conditioner unit 1. In a second example, the control unit 72 controls the flow rate of the fluid by adjusting an open amount of an electric valve 77. The electric valve 77 is arranged in a pipe connected to the air conditioner unit 1. In a third example, the control unit 72 controls the temperature of the fluid supplied to the air conditioner unit 1 by adjusting an output of the cooling apparatus 71 and/or an output of the heating apparatus 78 based on a value of a fluid temperature sensor 89 that measures the temperature of the fluid. The control unit 72 may control the temperature of the fluid flowing out of the air conditioner unit 1 by adjusting the flow rate of the fluid. In the case of the air conditioner 2 including the refrigerant circuit 80, the control unit 72 controls the flow rate and the temperature of the fluid by adjusting an output of the compressor 84 and an open amount of the expansion valve 85.

### First Embodiment of Air Conditioner

An example of the air conditioner 2 will now be described with reference to Fig. 21. The air conditioner 2 includes the air conditioner unit 1, the cooling apparatus 71, and the control unit 72. The cooling apparatus 71 is connected to the air conditioner unit 1. the control unit 72 controls the cooling apparatus 71. The cooling apparatus 71 cools a fluid and supplies the cooled fluid to the heat exchanger 10.

In the example shown by Fig. 21, water is used as the fluid flowing through the heat exchanger 10. The cooling apparatus 71 may be a cooling tower 73. The cooling tower 73 cools the water drained from the heat exchanger 10. The cooling tower 73 supplies the cooled water to the heat exchanger 10.

### Second Embodiment of Air Conditioner

Another example of the air conditioner 2 will now be described with reference to Fig. 22. As shown in Fig. 22, the fluid supply device 75 may be a water supply unit 74 for supplying water. An example of the water supply unit 74 is a faucet. Another example of the water supply unit 74 is a pump that pumps the water out of a well or a river. In the example shown in Fig. 22, the water that has been circulated through the heat exchanger 10 is drained to a sewer 76.

The control unit 72 controls the flow rate and/or the temperature of the fluid based on the temperature of the subject area ST, the direction of air current passing through the heat exchanger 10, the velocity of air current passing through the heat exchanger 10, and/or the outside temperature TA. For example, the control unit 72 controls the flow rate and/or the temperature of the fluid supplied from the fluid supply device 75 by issuing an instruction to the fluid supply device 75 based on the temperature of the subject area ST, the direction of air current passing through the heat exchanger 10, the velocity of air current passing through the heat exchanger 10, and/or the outside temperature TA.

The air current direction sensor 95 may detect the direction of air current. The air current direction sensor 95 may be arranged at a position separated from the heat exchanger 10 by a predetermined distance. The air current velocity sensor 96 may detect the velocity of air current. The air current velocity sensor 96 may be arranged at a position separated from the heat exchanger 10 by a predetermined distance. The outside temperature sensor 93 may detect the outside temperature TA. The outside temperature sensor 93 may be arranged at a position separated from the heat exchanger 10 by a predetermined distance.

The control unit 72 may vary a driving mode of the fluid supply device 75 in accordance with the season. For example, the control unit 72 changes the driving mode of the fluid supply device 75 in accordance with the outside temperature TA and the season. In this case, the control unit 72 may drive the fluid supply device 75 in different driving modes if the seasons are different even when the outside temperature TA is the same. The control unit 72 may control the flow rate of the fluid by adjusting an open amount of the electric valve 77.

### Third Embodiment of Air Conditioner

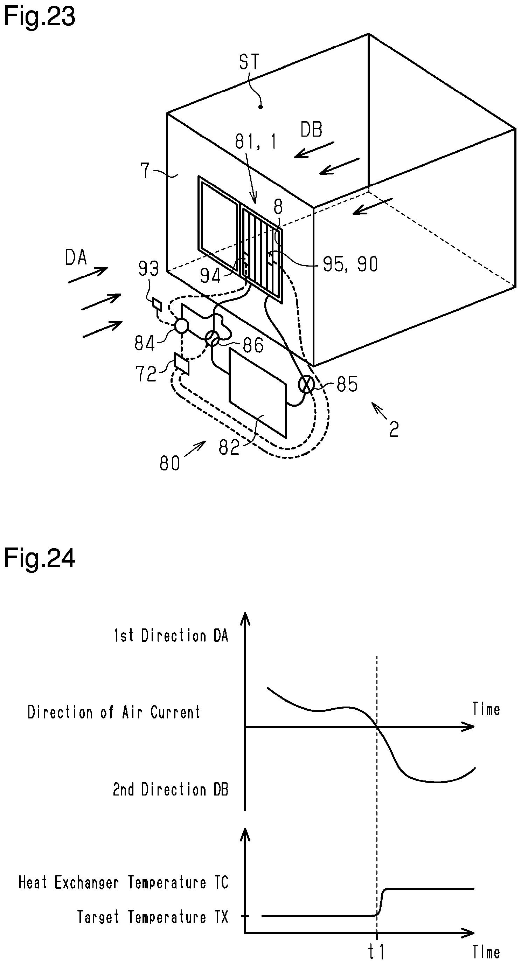

A further example of the air conditioner 2 will now be described with reference to Fig. 23. The air conditioner 2 performs air conditioning in the subject area ST. In the present example, the subject area ST is a room. The air conditioner 2 uses air current flowing from outside the room into the room to condition the air in the room. The air conditioner 2 includes the refrigerant circuit 80. Specifically, the refrigerant circuit 80 includes the first heat exchanger 81, the second heat exchanger 82, the compressor 84, the expansion valve 85, and the control unit 72. The refrigerant circuit 80 further includes a switching valve 86. A refrigerant, which is a fluid, flows through the refrigerant circuit 80.

The air conditioner 2 includes an air current detector 90 that detects the direction of air current. An example of the air current detector 90 is the air current direction sensor 95. The air current detector 90 may be a propeller-type air pressure gauge or an air pressure gauge having a pitot pipe. The air current detector 90 may be arranged on the first heat exchanger 81, in the gap between the first heat exchanger 81 and the open portion 8, or in the vicinity of the first heat exchanger 81. The air current detector 90 detects the direction and the velocity of air current passing through the first heat exchanger 81 or passing by the first heat exchanger 81. The air current detector 90 detects the direction of air current flowing from outside the room to inside the room as a first direction DA and detects the direction of air current flowing from inside the room to outside the room as a second direction DB.

The air conditioner 2 includes the outside temperature sensor 93 and a temperature sensor 94. The outside temperature sensor 93 measures the outside temperature TA. The temperature sensor 94 measures a heat exchanger temperature TC of the first heat exchanger 81. The heat exchanger temperature TC may be the temperature of a surface of the first heat exchanger 81, the temperature of the fluid flowing through the first heat exchanger 81, or the temperature of the air near the first heat exchanger 81.

The first heat exchanger 81 includes the air conditioner unit 1. The first heat exchanger 81 has the structure of the above-described heat exchanger 10. The first heat exchanger 81 is arranged in the open portion 8 of the partition 7 of a building. In the present example, the partition 7 corresponds to an outer wall. The open portion 8 corresponds to a window frame. The second heat exchanger 82, the compressor 84, the expansion valve 85, and the control unit 72 are disposed outdoors so as to maximize the indoor space. The compressor 84 is arranged in the refrigerant circuit 80 to compress the refrigerant. The expansion valve 85 is arranged in the refrigerant circuit 80 to expand the refrigerant. The switching valve 86 switches the direction in which the refrigerant flows through the refrigerant circuit 80. An example of the switching valve 86 is a four-way switching valve. The control unit 72 controls the compressor 84, the expansion valve 85, and the switching valve 86.

The control unit 72 executes a cooling process and a heating process. During a cooling process, the control unit 72 cools the refrigerant and supplies the cooled refrigerant to the first heat exchanger 81 by controlling the compressor 84, the expansion valve 85, and the switching valve 86. During a heating process, the control unit 72 heats the refrigerant and supplies the heated refrigerant to the first heat exchanger 81 by controlling the compressor 84, the expansion valve 85, and the switching valve 86.

### Fourth Embodiment of Air Conditioner

A further example of the air conditioner 2 will now be described. The air conditioner 2 has the same configuration as that of the third embodiment. Same reference numerals are given to those elements that are described in the third embodiment. Such elements will be described briefly with reference to Fig. 23. The air conditioner 2 of the present embodiment performs air conditioning that differs from that of the third embodiment.

The air conditioner 2 performs air conditioning in the subject area ST. In the present example, the subject area ST is a room. The air conditioner 2 uses air current flowing from outside the room into the room to condition the air in the room. The air conditioner 2 includes the refrigerant circuit 80. Specifically, the refrigerant circuit 80 includes the first heat exchanger 81, the second heat exchanger 82, the compressor 84, the expansion valve 85, and the control unit 72. The refrigerant circuit 80 further includes the switching valve 86. A refrigerant, which is a fluid, flows through the refrigerant circuit 80.

The air conditioner 2 includes the air current detector 90 that detects the direction of air current. The air current detector 90 detects the direction of air current flowing from outside the room to inside the room as the first direction DA and detects the direction of air current flowing from inside the room to outside the room as the second direction DB.

The air conditioner 2 includes the outside temperature sensor 93 and the temperature sensor 94. The outside temperature sensor 93 measures the outside temperature TA. The temperature sensor 94 measures the heat exchanger temperature TC of the first heat exchanger 81. The first heat exchanger 81 includes the air conditioner unit 1. The first heat exchanger 81 has the structure of the above-described heat exchanger 10. The control unit 72 executes a cooling process and a heating process.

The operation of the control unit 72 will now be described with reference to Figs. 24 and 25.

The control unit 72 obtains the direction of air current from the air current detector 90. The control unit 72 obtains the heat exchanger temperature TC of the first heat exchanger 81 from the temperature sensor 94.

As shown in Fig. 24, the control unit 72 executes the following control during cooling operation. In Fig. 24, "t1" indicates when the direction of air current passing through the first heat exchanger 81 switches.

The control unit 72 controls the flow rate and/or the temperature of the fluid so that the heat exchanger temperature TC when air current is directed from inside the subject area ST toward outside the subject area ST (hereafter, air current in second direction DB) becomes higher than a target temperature TX of the heat exchanger temperature TC when air current is directed from outside the subject area ST toward inside the subject area ST (hereafter, air current in first direction DA).

In an example, when air current is directed in the first direction DA, the control unit 72 sets the target temperature TX of the heat exchanger temperature TC to a predetermined temperature that is lower than the temperature of the subject area ST. In this case, the first heat exchanger 81 cools air current from outside the subject area ST before entering the subject area ST.

Air current in the second direction DB does not contribute to cooling of the air in the subject area ST. Thus, the control unit 72 limits the operation of the compressor 84. Specifically, when air current is directed in the second direction DB, the control unit 72 controls the flow rate and/or the temperature of the fluid so that the heat exchanger temperature TC of the first heat exchanger 81 becomes higher than the set target temperature TX. For example, the control unit 72 decreases the rotation speed of the motor in the compressor 84 so that the heat exchanger temperature TC of the first heat exchanger 81 increases. This reduces electric power consumption of the compressor 84.

As shown in Fig. 25, the control unit 72 executes the following control during heating operation. In Fig. 25, "t2" indicates when the direction of the air current passing through the first heat exchanger 81 switches.

The control unit 72 controls the flow rate and/or the temperature of the fluid so that the heat exchanger temperature TC when air current is directed in the second direction DB becomes lower than the target temperature TX of the heat exchanger temperature TC when air current is directed from outside the subject area ST toward inside the subject area.

In an example, when air current is directed in the first direction DA, the control unit 72 sets the target temperature TX of the heat exchanger temperature TC to a predetermined temperature that is higher than the temperature of the subject area ST. In this case, the first heat exchanger 81 heats air current from the outside the subject area ST before entering the subject area ST.

Air current in the second direction DB does not contribute to heating of the air in the subject area ST. Thus, the control unit 72 limits the operation of the compressor 84. Specifically, when air current is directed in the second direction DB, the control unit 72 controls the flow rate and/or the temperature of the fluid so that the heat exchanger temperature TC of the first heat exchanger 81 becomes lower than the set target temperature TX. For example, the control unit 72 decreases the rotation speed of the motor in the compressor 84 so that the heat exchanger temperature TC of the first heat exchanger 81 decreases. This reduces electric power consumption of the compressor 84.

The control of the heat exchanger temperature TC in the present embodiment may be applied to the air conditioner 2 of another embodiment. For example, in the case of the air conditioner 2 in the first embodiment, the control unit 72 may control the heat exchanger temperature TC of the heat exchanger 10 by adjusting an output of the cooling tower 73. In the case of the air conditioner 2 in the second embodiment, the control unit 72 may control the heat exchanger temperature TC of the heat exchanger 10 by adjusting an open amount of the electric valve 77 to adjust the flow rate of the fluid. When the air conditioner 2 includes the heating apparatus 78, the control unit 72 may control the heat exchanger temperature TC of the heat exchanger 10 by adjusting an output of the heating apparatus 78.

### Fifth Embodiment of Air Conditioner

A further example of the air conditioner 2 will now be described with reference to Figs. 26 to 28. Same reference numerals are given to those elements that are described in the above-described embodiments. Such elements will not be described in detail.

The air conditioner 2 performs air conditioning in the subject area ST. In the present example, the subject area ST is a room. The air conditioner 2 uses air current flowing from outside the room into the room to condition the air in the room. The air conditioner 2 includes the annular flow passage 100. Specifically, the annular flow passage 100 includes the first heat exchanger 81, the second heat exchanger 82, a first fluid passage 101, and a second fluid passage 102. The first fluid passage 101 connects a fluid outlet of the first heat exchanger 81 and a fluid inlet of the second heat exchanger 82. The second fluid passage 102 connects a fluid inlet of the first heat exchanger 81 and a fluid outlet of the second heat exchanger 82. The air conditioner 2 further includes the cooling apparatus 71, the heating apparatus 78, and the control unit 72. The cooling apparatus 71 and the heating apparatus 78 are arranged in the second fluid passage 102. The cooling apparatus 71 cools the fluid flowing through the second fluid passage 102. The heating apparatus 78 heats the fluid flowing through the second fluid passage 102.

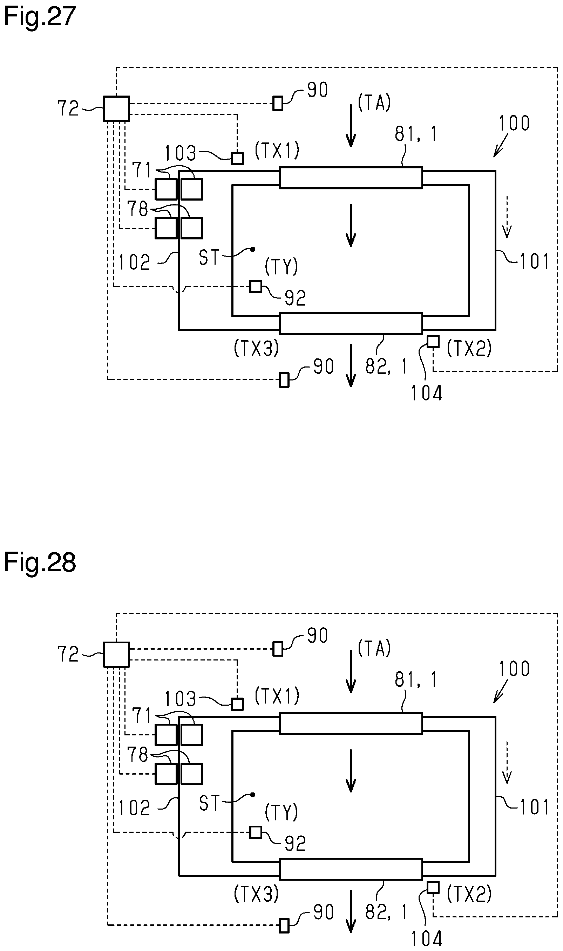

The air conditioner 2 includes the air current detector 90 that detects the direction of air current (refer to Figs. 27 and 28). One air current detector 90 is arranged on the first heat exchanger 81 or in the vicinity of the first heat exchanger 81. Another air current detector 90 is arranged on the second heat exchanger 82 or in the vicinity of the second heat exchanger 82. The air current detectors 90 measure the direction of air current passing through the first heat exchanger 81 or the second heat exchanger 82.

The air conditioner 2 includes the subject temperature sensor 92, a first temperature sensor 103, and a second temperature sensor 104 (refer to Figs. 27 and 28). The subject temperature sensor 92 measures the temperature of the subject area ST. The first temperature sensor 103 measures the heat exchanger temperature TC of the first heat exchanger 81 near the fluid inlet. The second temperature sensor 104 measures the heat exchanger temperature TC of the second heat exchanger 82 near the fluid inlet.

The first heat exchanger 81 includes the air conditioner unit 1. The first heat exchanger 81 has the structure of the above-described heat exchanger 10. The first heat exchanger 81 is arranged in a first partition 7A of the room that forms the subject area ST. The first heat exchanger 81 is arranged in a first open portion 8A of the first partition 7A.

The second heat exchanger 82 includes the air conditioner unit 1. The second heat exchanger 82 has the structure of the above-described heat exchanger 10. For example, the second heat exchanger 82 is arranged in a second partition 7B of the room that forms the subject area ST. The second partition 7B opposes the first partition 7A in which the first heat exchanger 81 is arranged. The second heat exchanger 82 is arranged in a second open portion 8B of the second partition 7B.

The operation of the control unit 72 will now be described with reference to Figs. 27 and 28.

In a first air current direction state, air current from the first heat exchanger 81 enters the subject area ST and passes through the second heat exchanger 82. In a second air current direction state, air current from the second heat exchanger 82 enters the subject area ST and passes through the first heat exchanger 81. The control unit 72 determines the direction of air current based on the direction obtained from the two air current detectors 90.

When air current flows in the first air current direction state during a cooling operation, the control unit 72 executes the following control.

The control unit 72 controls the temperature of the fluid so that the heat exchanger temperature TC of the first heat exchanger 81 in the first air current direction state becomes lower than the temperature TY of the subject area ST, and so that the heat exchanger temperature TC of the second heat exchanger 82 in the first air current direction state becomes higher than the temperature TY of the subject area ST.

As shown in the example of Fig. 27, when air current flows in the first air current direction state during a cooling operation, the control unit 72 controls the temperature of the fluid by adjusting an output of the cooling apparatus 71 so that the temperature TX1 of the first heat exchanger 81 near the inlet becomes lower than the temperature TY of the subject area ST, and so that the temperature TX2 of the second heat exchanger 82 near the inlet becomes higher than the temperature TY of the subject area ST. With such a control, the first heat exchanger 81 cools air current flowing from outside the subject area ST into the subject area ST as it passes through the first heat exchanger 81. In this case, the fluid exchanges heat with the air current flowing from outside the subject area ST into the subject area ST and thus the fluid is heated. The fluid is cooled by air current out of the subject area ST as the fluid flows through the second heat exchanger 82. In this manner, the air current flowing out of the subject area ST cools the fluid. In this case, the temperature TX3 of the second heat exchanger 82 near the outlet is lower than the temperature TX2 of the second heat exchanger 82 near the inlet. This reduces the amount of energy required for cooling the fluid as compared with when the fluid is supplied to the first heat exchanger 81 without using air current flowing out of the subject area ST. Thus, the energy consumption during cooling operation is reduced.

When air current flows in the first air current direction state during a heating operation, the control unit 72 executes the following control.

The control unit 72 controls the temperature of the fluid so that the heat exchanger temperature TC of the first heat exchanger 81 in the first air current direction state becomes higher than the temperature TY of the subject area ST, and so that the heat exchanger temperature TC of the second heat exchanger 82 in the first air current direction state becomes lower than the temperature TY of the subject area ST.

As shown in the example of Fig. 28, when air current flows in the first air current direction state during a heating operation, the control unit 72 controls the temperature of the fluid by adjusting an output of the heating apparatus 78 so that the temperature TX1 of the first heat exchanger 81 near the inlet becomes higher than the temperature TY of the subject area ST, and so that the temperature TX2 of the second heat exchanger 82 near the inlet becomes lower than the temperature TY of the subject area ST. With such a control, the first heat exchanger 81 heats air current flowing from outside the subject area ST into the subject area ST as it passes through the first heat exchanger 81. In this case, the fluid exchanges heat with the air current flowing from outside the subject area ST into the subject area ST and thus the fluid is cooled. The fluid is heated by air current flowing out of the subject area ST as the fluid flows through the second heat exchanger 82. In this manner, the air current flowing out of the subject area ST heats the fluid. In this case, the temperature TX3 of the second heat exchanger 82 near the outlet is higher than the temperature TX2 of the second heat exchanger 82 near the inlet. This reduces the amount of energy required for heating the fluid as compared with when the fluid is supplied to the first heat exchanger 81 without using air current flowing out of the subject area ST. Thus, the energy consumption during heating operation is reduced.

In a modified example, the air conditioner 2 may further include the switching valve 86. The switching valve 86 switches the direction in which the fluid flows. When air current is in the second air current direction state, the control unit 72 resets the first heat exchanger 81 to a heat exchanger that functioned as the second heat exchanger 82 in the first air current direction state, and resets the second heat exchanger 82 to a heat exchanger that functioned as the first heat exchanger 81 in the first air current direction state. After the setting of the heat exchangers is changed, the control unit 72 executes the same control of the present embodiment. In the present modified example, the first temperature sensor 103 is disposed at both of the fluid inlet and the fluid outlet of the first heat exchanger 81. The second temperature sensor 104 is disposed at both of the fluid inlet and the fluid outlet of the second heat exchanger 82.

The control of the heat exchanger temperature TC executed by the control unit 72 in the present embodiment may be applied to the air conditioner 2 of another embodiment. In an example in which the air conditioner 2 includes the refrigerant circuit 80, the control unit 72 controls the heat exchanger temperature TC of the first heat exchanger 81 and the heat exchanger temperature TC of the second heat exchanger 82 by adjusting an output of the compressor 84 and/or an open amount of the expansion valve 85.

### Sixth Embodiment of Air Conditioner

A further example of the air conditioner 2 will now be described with reference to Fig. 29. Same reference numerals are given to those elements that are described in the above-described embodiments. Such elements will not be described in detail.

The air conditioner 2 performs air conditioning in the subject area ST. In the present example, the subject area ST is a room. The air conditioner 2 uses air current flowing from outside the room into the room to condition the air in the room. The air conditioner 2 includes a circuit (refrigerant circuit 80) that performs a refrigeration cycle. The refrigerant circuit 80 includes the first heat exchanger 81, the second heat exchanger 82, the compressor 84, the expansion valve 85, and the switching valve 86. The switching valve 86 switches the direction in which the fluid flows. The air conditioner 2 includes the control unit 72.

The first heat exchanger 81 includes the air conditioner unit 1. The first heat exchanger 81 has the structure of the above-described heat exchanger 10. The first heat exchanger 81 is arranged in one partition 7 of the room that forms the subject area ST. The second heat exchanger 82 includes the air conditioner unit 1. The second heat exchanger 82 has the structure of the above-described heat exchanger 10. The second heat exchanger 82 is arranged in another partition 7 of the room that forms the subject area ST. The other partition 7 opposes the partition 7 in which the first heat exchanger 81 is arranged.

The air conditioner 2 includes the air current detector 90 that detects the direction of air current. One air current detector 90 is arranged on the first heat exchanger 81 or in the vicinity of the first heat exchanger 81. Another air current detector 90 is arranged on the second heat exchanger 82 or in the vicinity of the second heat exchanger 82. The air current detectors 90 measure the direction of air current passing through the first heat exchanger 81 or the second heat exchanger 82.

The air conditioner 2 includes the subject temperature sensor 92, the first temperature sensor 103, and the second temperature sensor 104. The subject temperature sensor 92 measures the temperature TY of the subject area ST. The first temperature sensor 103 measures the heat exchanger temperature TC of the first heat exchanger 81. The second temperature sensor 104 measures the heat exchanger temperature TC of the second heat exchanger 82.

The operation of the control unit 72 will now be described with reference to Fig. 29.

When air current is in an inwardly-directed state, air current from outside the subject area ST flows through the first heat exchanger 81 or the second heat exchanger 82 into the subject area ST. When air current is in an outwardly-directed state, air current from inside the subject area ST flows through the first heat exchanger 81 or the second heat exchanger 82 out of the subject area ST. The control unit 72 determines the direction of air current based on information obtained from the air current detector 90.

The control unit 72 executes the following control based on the direction of air current at the first heat exchanger 81 or the second heat exchanger 82.

During a cooling operation, the control unit 72 controls the switching valve 86 to control the fluid to flow in a first direction so that the heat exchanger temperature TC when air current from outside the subject area ST enters the subject area ST in the inwardly-directed state becomes lower than the temperature TY of the subject area ST.

The control unit 72 controls the switching valve 86 to control the flow of the fluid to switch to a second direction when the air current changes directions from inward to the subject area ST to outward from the subject area ST so that the heat exchanger temperature TC becomes higher than the temperature TY of the subject area ST. The second direction is opposite to the first direction.

A specific example in which air current passing through the first heat exchanger 81 is used will now be described.

The first direction is defined as the direction in which the fluid flows from the compressor 84 through the second heat exchanger 82, the expansion valve 85, and the first heat exchanger 81 in this order. The second direction is defined as the direction in which the fluid flows from the compressor 84 through the first heat exchanger 81, the expansion valve 85, and the second heat exchanger 82 in this order.

The control unit 72 controls the fluid to flow through the refrigerant circuit 80 in the first direction and adjusts an output of the compressor 84 and an open amount of the expansion valve 85 so that the heat exchanger temperature TC1 of the first heat exchanger 81 becomes lower than the temperature TY of the subject area ST and so that the heat exchanger temperature TC2 of the second heat exchanger 82 becomes higher than the temperature TY of the subject area ST. This control is defined as a first control.

The control unit 72 controls the fluid to flow through the refrigerant circuit 80 in the second direction and adjusts an output of the compressor 84 and an open amount of the expansion valve 85 so that the heat exchanger temperature TC1 of the first heat exchanger 81 becomes higher than the temperature TY of the subject area ST and so that the heat exchanger temperature TC2 of the second heat exchanger 82 becomes lower than the temperature TY of the subject area ST. This control is defined as a second control.

When the air current passing through the first heat exchanger 81 is in the inwardly-directed state during a cooling operation, the control unit 72 executes the first control by controlling the fluid to flow in the first direction. In this case, air current cooled by the first heat exchanger 81 enters the subject area ST. Then, outward air current passing through the second heat exchanger 82 exchanges heat with the fluid in the second heat exchanger 82 to cool the fluid. This reduces energy consumption.

When the air current passing through the first heat exchanger 81 is in the outwardly-directed state during a cooling operation, the control unit 72 executes the second control by controlling the fluid to flow in the second direction. In this case, air current cooled by the second heat exchanger 82 enters the subject area ST. Then, outward air current passing through the first heat exchanger 81 exchanges heat with the fluid in the first heat exchanger 81 to cool the fluid. This reduces energy consumption.

When the air current passing through the first heat exchanger 81 is in the inwardly-directed state during a heating operation, the control unit 72 executes the second control by controlling the fluid to flow in the second direction. In this case, air current heated by the first heat exchanger 81 enters the subject area ST. Then, outward air current passing through the second heat exchanger 82 exchanges heat with the fluid in the second heat exchanger 82 to heat the fluid. This reduces energy consumption.

When the air current passing through the first heat exchanger 81 is in the outwardly-directed state during heating operation, the control unit 72 executes the first control by controlling the fluid to flow in the first direction. In this case, air current heated by the second heat exchanger 82 enters the subject area ST. Then, outward air current passing through the first heat exchanger 81 exchanges heat with the fluid in the first heat exchanger 81 to heat the fluid. This reduces energy consumption.

In another example of the air conditioner 2, one of the first heat exchanger 81 and the second heat exchanger 82 may be arranged outside the subject area ST. For example, the first heat exchanger 81 is arranged in the partition 7 of the room that forms the subject area ST. The second heat exchanger 82 is arranged outside the subject area ST. In such an air conditioner 2, the direction of air current may be controlled in the same manner as described above. The advantages of the above-described embodiment are also obtained in this case.

The operation of the present embodiment will now be described.

The air conditioner unit 1 includes the heat exchanger 10. The air conditioner unit 1 is devoid of a device that forces air to pass through the heat exchanger 10. The heat exchanger 10 is configured to allow passage of air current that comes into contact with the heat exchanger 10. For example, a cooled fluid flows through the heat exchanger 10. The fluid cools the heat exchanger 10. When air current is produced near the heat exchanger 10 and passes through the heat exchanger 10, the heat exchanger 10 cools the air current. In this manner, the ambient air of the heat exchanger 10 is cooled. Further, as the fluid cools the heat exchanger 10, the temperature in the vicinity of the heat exchanger 10 differs from the temperature in a region around the vicinity of the heat exchanger 10 so that convection of air occurs. This produces air current that passes through the heat exchanger 10, and then the air current is cooled.

The heat exchanger 10 is configured to allow passage of air current that comes into contact with the heat exchanger 10. Therefore, a natural air current passes through the heat exchanger 10 at gently fluctuating velocities in the same manner as in nature. The natural air current cooled by the heat exchanger 10 is pleasant on a person. In this manner, the heat exchanger 10 has a relaxation effect.

The present embodiment has the following advantages.
(1) The air conditioner unit 1 includes the heat exchanger 10 and is devoid of a device that forces air to pass through the heat exchanger 10. The heat exchanger 10 is arrangeable in the partition 7 that separates the subject area ST from outside the subject area ST. The heat exchanger 10 is configured to allow passage of air current that comes into contact with the heat exchanger 10. The heat exchanger 10 is configured to allow a fluid to circulate internally. The heat exchanger 10 changes the temperature of air current entering the subject area ST from outside the subject area ST with a fluid flowing through the heat exchanger 10 having a temperature that differs from the outside temperature TA to air-condition the subject area ST with the air current having the changed temperature. For example, the heat exchanger 10 may be configured to allow a fluid supplied from the cooling apparatus 71 to circulate internally. The heat exchanger 10 may be configured to allow a fluid supplied from the fluid supply device 75, such as a pump or a faucet, to circulate internally. The heat exchanger 10 may be configured to allow a fluid supplied from another heat exchanger 10, that is an element of the refrigerant circuit 80, to circulate internally. This configuration uses air current produced indoors or outdoors to perform air conditioning.
(2) Preferably, the air conditioner unit 1 further includes the water tank 51 that stores water condensed on the heat exchanger 10 and/or the drain 52 that drains the water condensed on the heat exchanger 10. This configuration stores or drains the water condensed on the heat exchanger 10 so that the vicinity of the heat exchanger 10 will not be dampened by water.
(3) The water tank 51 may be movable or extendable. This allows the size of the water tank 51 to be changed. The drain 52 may be movable or extendable. This allows the position where the water is drained to be changed.
(4) The heat exchanger 10 may be configured to partition the residential area SA. This configuration partitions the residential area SA while performing air conditioning in the air near the partition 7. In addition to a room, the residential area SA includes a yard, a balcony, a hallway, or a parking space adjoin to a building.
(5) The heat exchanger 10 may be shaped as a panel or a foldable panel. With this configuration, the panel-shaped heat exchanger 10 facing a subject region performs air conditioning in the subject region.
(6) The heat exchanger 10 may include the pipes 21 arranged in intervals, the fins 40 arranged on the pipes 21, and the support 22 that supports the pipe 21. In this case, it is preferred that the support 22 support the pipes 21 such that the first surface 23 and the second surface 24 of the pipes 21 are exposed. This configuration exposes the first surface 23 of the pipes 21 and the second surface 24, opposite to the first surface 23. This allows for cooling of the air current flowing from one of a first space in front of the first surface 23 of the heat exchanger 10 and a second space in front of the second surface 24 of the heat exchanger 10 to the other.
(7) In the heat exchanger 10, the pipe 21 includes the groove 26. Preferably, the groove 26 extends in the longitudinal direction of the pipe 21. This configuration drains the water condensed on the heat exchanger 10 along the pipe 21. Thus, the water condensed on the heat exchanger 10 is collected at a predetermined position, thereby avoiding the water from spreading around the heat exchanger 10.
(8) It is preferred that the pipe 21 and/or the fin 40 include a surface coated with the water-repellent film 44. This configuration limits the collection of condensed water on the surface of the pipe 21 and the fin 40 to avoid air current from becoming humid.
(9) Preferably, the air conditioner unit 1 further includes the fluid supply pipe 61 and the fluid drain pipe 62. Preferably, the fluid supply pipe 61 and the fluid drain pipe 62 are connected to the heat exchanger 10 by the rotatable joint 63 or the flexible joint 64. This configuration allows for smooth movement of the heat exchanger 10. For example, when the heat exchanger 10 is arranged in the window 4, the heat exchanger 10 can be moved smoothly within the window frame.
(10) The air conditioner 2 includes the air conditioner unit 1. This configuration allows air current to be used to perform air conditioning.
(11) In the air conditioner 2, the control unit 72 uses control information to control the flow rate and/or the temperature of the fluid. The control information is the temperature of the subject area ST, the direction of air current passing through the heat exchanger 10, the velocity of air current passing through the heat exchanger 10, and/or the outside temperature TA. This configuration adjusts the temperature of air current (temperature of air in air current) passing through the air conditioner unit 1.
(12) In the air conditioner 2, the control unit 72 may execute the following control.
   During a cooling operation, the control unit 72 controls the flow rate and/or the temperature of the fluid so that the heat exchanger temperature TC when air current is directed from inside the subject area ST toward outside the subject area ST becomes higher than the target temperature TX of the heat exchanger temperature TC when air current is directed from outside the subject area ST toward inside the subject area ST. During a heating operation, the control unit 72 controls the flow rate and/or the temperature of the fluid so that the heat exchanger temperature TC when air current is directed from inside the subject area ST toward outside the subject area ST becomes lower than the target temperature TX of the heat exchanger temperature TC when air current is directed from outside the subject area ST toward inside the subject area ST. This configuration saves resources. For example, the flow rate of the fluid in the heat exchanger 10 can be decreased. Also, this configuration reduces the energy consumed by adjusting the temperature of the fluid.
(13) The air conditioner 2 may include the following configuration. The air conditioner 2 includes the first heat exchanger 81, the second heat exchanger 82, the first fluid passage 101 that connects the first heat exchanger 81 and the second heat exchanger 82, and the second fluid passage 102 that connects the first heat exchanger 81 and the second heat exchanger 82.
   During a cooling operation, the control unit 72 controls the temperature of the fluid so that the heat exchanger temperature TC of the first heat exchanger 81 becomes lower than the temperature of the subject area ST when in an air current direction state (first air current direction state) in which air current from the first heat exchanger 81 enters the subject area ST and passes through the second heat exchanger 82, and so that the heat exchanger temperature TC of the second heat exchanger 82 becomes higher than the temperature of the subject area ST in the first air current direction state.
   During a heating operation, the control unit 72 controls the temperature of the fluid so that the heat exchanger temperature TC of the first heat exchanger 81 becomes higher than the temperature of the subject area ST in the air current direction state (first air current direction state) in which air current from the first heat exchanger 81 enters the subject area ST and passes through the second heat exchanger 82, and so that the heat exchanger temperature TC of the second heat exchanger 82 becomes lower than the temperature of the subject area ST in the first air current direction state.
   This configuration cools the fluid with air current flowing out of the subject area ST during cooling operation, which in turn, reduces energy consumption. This configuration also heats the fluid with air current flowing out of the subject area ST during heating operation, which in turn, reduces energy consumption.
(14) The air conditioner 2 may be configured to air-condition the subject area ST with a refrigeration cycle. The air conditioner 2 includes the above-described air conditioner unit 1 as a heat exchanger for a refrigeration cycle. This configuration uses air current to perform air conditioning in the air conditioner 2 having a refrigeration cycle.
(15) The air conditioner 2 may include the following configuration. The air conditioner 2 includes the first heat exchanger 81, the second heat exchanger 82, the expansion valve 85, and the compressor 84. The expansion valve 85 is arranged in the first fluid passage 101 that connects the first heat exchanger 81 and the second heat exchanger 82. The compressor 84 is arranged in the second fluid passage 102 that connects the first heat exchanger 81 and the second heat exchanger 82.
   During a cooling operation, the control unit 72 controls the temperature of the fluid by actuating the compressor 84 and/or the expansion valve 85 so that the heat exchanger temperature TC of the first heat exchanger 81 becomes lower than the temperature of the subject area ST when in an air current direction state (first air current direction state) in which air current from the first heat exchanger 81 enters the subject area ST and passes through the second heat exchanger 82, and so that the heat exchanger temperature TC of the second heat exchanger 82 becomes higher than the temperature of the subject area ST in the first air current direction state.
   During a heating operation, the control unit 72 controls the temperature of the fluid by actuating the compressor 84 and/or the expansion valve 85 so that the heat exchanger temperature TC of the first heat exchanger 81 becomes higher than the temperature of the subject area ST when in the air current direction state (first air current direction state) in which air current from the first heat exchanger 81 enters the subject area ST and passes through the second heat exchanger 82, and so that the heat exchanger temperature TC of the second heat exchanger 82 becomes lower than the temperature of the subject area ST in the first air current direction state.
   This configuration cools the fluid with air current flowing out of the subject area ST during cooling operation, which in turn, reduces energy consumption. This configuration also heats the fluid with air current flowing out of the subject area ST during heating operation, which in turn, reduces energy consumption.
(16) The air conditioner 2 may include the following configuration. The above-described air conditioner 2 includes the refrigerant circuit 80 and the switching valve 86. The refrigerant circuit 80 performs a refrigeration cycle. The switching valve 86 switches the direction in which the fluid flows.

During a cooling operation, the control unit 72 controls the switching valve 86 to control the fluid to flow in the first direction so that the heat exchanger temperature TC when air current is in an inwardly-directed state becomes lower than the temperature of the subject area ST. Further, the control unit 72 controls the switching valve 86 to control the flow of the fluid to switch to the second direction when the air current changes directions to outward from the subject area ST so that the heat exchanger temperature TC becomes higher than the temperature of the subject area ST.

During a heating operation, the control unit 72 controls the switching valve 86 to control the fluid to flow in the second direction so that the heat exchanger temperature TC in the inwardly-directed state becomes higher than the temperature of the subject area ST. Further, the control unit 72 controls the switching valve 86 to control the flow of the fluid to switch to the first direction when the air current changes directions to outward from the subject area ST so that the heat exchanger temperature TC becomes lower than the temperature of the subject area ST.

This configuration cools the fluid with air current flowing out of the subject area ST during cooling operation, which in turn, reduces energy consumption. This configuration also heats the fluid with air current flowing out of the subject area ST during heating operation, which in turn, reduces energy consumption.

### Modified Examples

In addition to the above embodiment, the air conditioner unit 1 and the air conditioner 2 of the present disclosure are applicable to, for example, modified examples of the above embodiment that are described below and combinations of at least two of the modified examples that do not contradict each other.

There is no limitation to a location where the air conditioner unit 1 is installed. The air conditioner unit 1 may be used outdoors. For example, the air conditioner unit 1 may be used in a campsite. The air conditioner unit 1 may be used in an event venue. The air conditioner unit 1 may be installed in a stadium. The air conditioner unit 1 may be arranged on a platform of a train station. The air conditioner unit 1 may be arranged in an underground shopping mall. The air conditioner unit 1 may be arranged near a ceiling. The air conditioner unit 1 may be portable.

In the above embodiment, the air conditioner unit 1 includes the heat exchanger 10 arranged in the window 4. Preferably, the air conditioner unit 1 is disposed at an inner side of the window glass. In this case, the air conditioner unit 1 may be operated in a state in which the window is closed. This cools or heats the air near the window 4.

A modified example of the air conditioner unit 1 will now be described with reference to Fig. 30. The air conditioner unit 1 of the modified example differs from that of the above embodiment in the structure of the heat exchanger 10. In the above embodiment, the heat exchanger 10 includes the pipes 21 arranged in intervals. The heat exchanger 10 of the modified example includes a pipe 21, heat exchanger fins 98, and a support 22. The heat exchanger fins 98 are connected to the pipe 21. The support 22 supports the heat exchanger fins 98. A fluid flows through the pipe 21. The number of heat exchanger fins 98 connected to the pipe 21 may be one or more. For example, the pipe 21 extends along the lower end of the heat exchanger 10. The heat exchanger fins 98 are arranged next to one another in intervals at an upper part of the pipe 21 in a longitudinal direction of the pipe 21. The heat exchanger fins 98 are arranged to form a passage 25 through which air current passes. The passage 25 is formed as the gap SB between the heat exchanger fins 98. In another modified example, the passage 25 may be formed as a through hole formed in the heat exchanger fin 98. The heat exchanger fin 98 may be rotatably arranged on the support 22. The heat exchanger fin 98 may be a mesh sheet. The heat exchanger fin 98 exchanges heat with air. The heat exchanger fin 98 is formed from a member having a high thermal conductivity. For example, the heat exchanger fin 98 is formed from copper.

An installation example of the air conditioner unit 1 will now be described with reference to Fig. 31. Fig. 31 is a diagram of the gazebo 111 that forms an open area. The gazebo 111 includes a roof 112 and columns 113 that support the roof 112. The columns 113 form the partition 7. The heat exchanger 10 of the air conditioner unit 1 is arranged in the open portion 114 between two columns 113.

It should be understood that the air conditioner unit 1 and the air conditioner 2 in the above embodiment may be embodied in many other specific forms within the scope and equivalence of the air conditioner unit 1 and the air conditioner 2 described in the appended claims.

### REFERENCE SIGNS LIST

DTA) temperature difference
DTB) temperature difference
SA) residential area
ST) subject area
TA) outside temperature
TC) heat exchanger temperature
1) air conditioner unit
2) air conditioner
7) partition
7A) first partition
7B) second partition
8) open portion
8A) first open portion
8B) second open portion
10) heat exchanger
21) pipe
22) support
23) first surface
24) second surface
26) groove
40) fin
44) water-repellent film
51) water tank
52) drain
61) fluid supply pipe
62) fluid drain pipe
63) rotatable joint
64) flexible joint
71) cooling apparatus
72) control unit
80) refrigerant circuit
81) first heat exchanger
82) second heat exchanger
83) third heat exchanger
84) compressor
85) expansion valve
86) switching valve
87) control unit
90) air current detector

## Claims

1. An air conditioner unit (1), comprising:
a heat exchanger (10), wherein:
the air conditioner unit (1) is devoid of a device that forces air to pass through the heat exchanger (10);
the heat exchanger (10) is arrangeable in a partition (7) that separates a subject area (ST) from outside the subject area (ST);
the heat exchanger (10) is configured to allow passage of air current that comes into contact with the heat exchanger (10);
the heat exchanger (10) is configured to allow a fluid to circulate internally; and
the heat exchanger (10) changes a temperature of air current entering the subject area (ST) from outside the subject area (ST) with the fluid flowing through the heat exchanger (10) having a temperature that differs from an outside temperature to air-condition the subject area (ST) with the air current having the changed temperature.

2. The air conditioner unit according to claim 1, further comprising:
a water tank (51) that stores water condensed on the heat exchanger (10) and/or a drain (52) that drains the water condensed on the heat exchanger (10).

3. The air conditioner unit according to claim 2, wherein the water tank (51) and the drain (52) are configured to be movable or extendable.

4. The air conditioner unit according to claim any one of claims 1 to 3,
wherein the heat exchanger (10) is configured to partition a residential area (SA).

5. The air conditioner unit according to claim any one of claims 1 to 4,
wherein the heat exchanger (10) is shaped as a panel or a foldable panel.

6. The air conditioner unit according to any one of claims 1 to 5, wherein:
the heat exchanger (10) includes pipes (21) arranged in intervals, fins (40) arranged on the pipes (21), and a support (22) that supports the pipes (21); and
the support (22) supports the pipes (21) such that a first surface (23) of the pipes (21) and a second surface (24), opposite to the first surface (23), are exposed.

7. The air conditioner unit according to claim 6, wherein the pipes (21) include a groove (26) extending in a longitudinal direction of the pipes (21).

8. The air conditioner unit according to claim 6 or 7, wherein the pipes (21) and/or the fins (40) include a surface coated with a water-repellent film (44).

9. The air conditioner unit according to any one of claims 1 to 8, further comprising:
a fluid supply pipe (61) that supplies the fluid to the heat exchanger (10); and
a fluid drain pipe (62) that drains the fluid out of the heat exchanger (10),
wherein the fluid supply pipe (61) and the fluid drain pipe (62) are connected to the heat exchanger (10) by a rotatable joint (63) or a flexible joint (64).

10. An air conditioner, comprising:
the air conditioner unit (1) according to any one of claims 1 to 9.

11. The air conditioner according to claim 10, further comprising:
a control unit (72),
wherein the control unit (72) controls a flow rate and/or a temperature of the fluid based on a temperature of the subject area (ST), a direction of air current passing through the heat exchanger (10), a velocity of air current passing through the heat exchanger (10), and/or the outside temperature.

12. The air conditioner according to claim 11, further comprising:
an air current detector (92) that detects the direction of air current, wherein:
the control unit (72) obtains the direction of air current, from the air current detector (92), and a heat exchanger temperature (TC) of the heat exchanger (81);
during a cooling operation, the control unit (72) controls the flow rate and/or the temperature of the fluid so that the heat exchanger temperature (TC) when air current is directed from inside the subject area (ST) toward outside the subject area (ST) becomes higher than a target temperature (TX) of the heat exchanger temperature (TC) when air current is directed from outside the subject area (ST) toward inside the subject area (ST); and
during a heating operation, the control unit (72) controls the flow rate and/or the temperature of the fluid so that the heat exchanger temperature (TC) when air current is directed from inside the subject area (ST) toward outside the subject area (ST) becomes lower than the target temperature (TX) of the heat exchanger temperature (TC) when air current is directed from outside the subject area (ST) toward inside the subject area (ST).

13. The air conditioner according to claim 11, comprising:
a first heat exchanger (81) serving as the air conditioner unit (1);
a second heat exchanger (82) serving as an additional air conditioner unit (1);
a first fluid passage (101) connecting the first heat exchanger (81) and the second heat exchanger (82); and
a second fluid passage (102) connecting the first heat exchanger (81) and the second heat exchanger(82), wherein:
during a cooling operation, the control unit controls the temperature of the fluid so that the heat exchanger temperature (TC) of the first heat exchanger (81) becomes lower than a temperature of the subject area (ST) when in an air current direction state in which air current from the first heat exchanger (81) enters the subject area (ST) and passes through the second heat exchanger (82), and so that the heat exchanger temperature (TC) of the second heat exchanger (82) becomes higher than the temperature of the subject area (ST) in the air current direction state; and
during a heating operation, the control unit controls the temperature of the fluid so that the heat exchanger temperature (TC) of the first heat exchanger (81) becomes higher than the temperature of the subject area (ST) in the air current direction state, and so that the heat exchanger temperature (TC) of the second heat exchanger (82) becomes lower than the temperature of the subject area (ST) in the air current direction state.

14. An air conditioner that air-conditions the subject area (ST) with a refrigeration cycle, the air conditioner comprising:
the air conditioner unit (1) according to any one of claims 1 to 9 as a heat exchanger for the refrigeration cycle.

15. The air conditioner according to claim 14, comprising:
a first heat exchanger (81) serving as the air conditioner unit (1);
a second heat exchanger (82) serving as an additional air conditioner unit (1);
an expansion valve (85) arranged in a first fluid passage (101) that connects the first heat exchanger (81) and the second heat exchanger (82);
a compressor (84) arranged in a second fluid passage (102) that connects the first heat exchanger (81) and the second heat exchanger(82); and
a control unit, wherein:
during a cooling operation, the control unit controls the temperature of the fluid by actuating the compressor (84) and/or the expansion valve (85) so that the heat exchanger temperature (TC) of the first heat exchanger (81) becomes lower than a temperature of the subject area (ST) when in an air current direction state in which air current from the first heat exchanger (81) enters the subject area (ST) and passes through the second heat exchanger (82), and so that the heat exchanger temperature (TC) of the second heat exchanger (82) becomes higher than the temperature of the subject area (ST) in the air current direction state; and
during a heating operation, the control unit controls the temperature of the fluid by actuating the compressor (84) and/or the expansion valve (85) so that the heat exchanger temperature (TC) of the first heat exchanger (81) becomes higher than the temperature of the subject area (ST) in the air current direction state, and so that the heat exchanger temperature (TC) of the second heat exchanger (82) becomes lower than the temperature of the subject area (ST) in the air current direction state.

16. The air conditioner according to claim 14 or 15, further comprising:
a switching valve (86) that switches a direction in which the fluid flows, wherein:
during a cooling operation, the switching valve (86) controls the fluid to flow in a first direction so that the heat exchanger temperature (TC) when air current from outside the subject area (ST) enters the subject area (ST) in an inwardly-directed state becomes lower than the temperature of the subject area (ST), and the switching valve (86) controls the flow of the fluid to switch to a second direction that is opposite the first direction when the air current changes directions from inward to the subject area (ST) to outward from the subject area (ST) so that the heat exchanger temperature (TC) becomes higher than the temperature of the subject area (ST); and
during a heating operation, the switching valve (86) controls the fluid to flow in the second direction so that the heat exchanger temperature (TC) in the inwardly-directed state in which air current from outside the subject area (ST) enters the subject area (ST) becomes higher than the temperature of the subject area (ST), and the switching valve (86) controls the flow of the fluid to switch to the first direction when the air current changes directions from inward to the subject area (ST) to outward from the subject area (ST) so that the heat exchanger temperature (TC) becomes lower than the temperature of the subject area (ST).
